# EUROPÄISCHE PATENTSCHRIFT

(11) **EP 2 780 606 B1**
(45) Veröffentlichungstag und Bekanntmachung des Hinweises auf die Patenterteilung: **11.01.2017**
(21) Anmeldenummer: 12786843.8
(22) Anmeldetag: 06.11.2012
(51) Int. Cl.: F16D 65/12

(54) **VERFAHREN ZUR HERSTELLUNG EINER BREMSSCHEIBE**
METHOD OF MANUFACTURE OF A BRAKE DISK
PROCÉDÉ DE FABRICATION D'UN DISQUE DE FREIN

(30) Priorität: 19.11.2011 DE 102011118985
(43) Veröffentlichungstag der Anmeldung: 24.09.2014
(73) Patentinhaber: Daimler AG, 70327 Stuttgart (DE)
(72) Erfinder: FAUTH, Andreas, 70197 Stuttgart (DE)
(74) Vertreter: JENSEN & SON
(86) Internationale Anmeldenummer: PCT/EP2012/004613
(87) Internationale Veröffentlichungsnummer: WO 2013/072025

(56) Entgegenhaltungen:
- WO-A1-2011/085749
- DE-A1-102009 012 216
- DE-A1-102010 026 728

## Beschreibung

Die Erfindung betrifft ein Verfahren zur Herstellung einer Bremsscheibe, insbesondere eines Kraftfahrzeuges, mit einem Topf, der einen Boden und eine davon abstehende und umlaufende Wand aufweist, und mit einem Reibring, der eine Öffnung aufweist, in der die Wand angeordnet ist. Unter der Bezeichnung Topf ist ebenso die die Ausgestaltung eines Radflansches zu verstehen.

Der Topf und der Reibring sind konzentrisch angeordnet, die Wand weist eine entlang eines Außenumfangs verlaufende axiale Topfverzahnung mit radial nach außen vorstehenden Topfzähnen auf, und in Umfangsrichtung zwischen benachbarten Topfzähnen ist je eine Topfzahnlücke angeordnet. Der Reibring weist eine entlang eines Innenumfangs verlaufende axiale Ringverzahnung auf, die komplementär zur Topfverzahnung ausgebildet ist und radial nach innen vorstehende Ringzähne aufweist. In Umfangsrichtung zwischen benachbarten Ringzähnen ist je eine Ringzahnlücke angeordnet. Die Topfzähne greifen in die Ringzahnlücken ein, und die Ringzähne greifen in die Topfzahnlücken ein. An wenigstens einer ersten Topfzahnlücke ist eine Lasche ausgeformt, die radial nach außen absteht und dem jeweiligen, mit dieser Topfzahnlücke in Eingriff stehenden Ringzahn an einem ersten axialen Ende radial übergreift. So eine Bremsscheibe geht z.B. aus DE-A-10 2009 012 216 hervor.

Sogenannte Verbundbremsscheiben, also Bremsscheiben, deren Reibring und Bremsscheibentopf aus unterschiedlichen Materialien bestehen, sind allgemein bekannt. Eine solche ist beispielsweise in der DE 4 419 757 A1 beschrieben. Verbundbremsscheiben finden zunehmend Anwendung, da durch die Trennung von Bremsscheibentopf und Reibring die sogenannten Teile jeweils für sich genommen für ihren Einsatz optimiert werden können.

Aus dem Stand der Technik ist ferner bekannt, am Bremsscheibentopf ein Formschlusselement, beispielsweise in Form einer Verzahnung, anzubringen, welche in eine komplementäre Verzahnung des Reibrings eingreift. Zur axialen Sicherung sind am Topf Laschen anzubringen, die zur axialen Sicherung gegen den Reibring umgebogen werden.

Beim Umbiegen der Laschen vermittels kann es zu Problemen kommen, da immer eine gewisse Rückfederung auftritt. Zwischen den Laschen und dem Reibring ist daher zwangsläufig immer ein gewisses Spiel, beispielsweise in Form eines Spaltes, vorhanden. Beim Biegen kann es zudem zu einem teilweisen Einreißen der Laschen kommen, was die Haltbarkeit der fertigen Bremsscheibe beeinträchtigt.

Es ist daher die Aufgabe der vorliegenden Erfindung, eine Verfahren bereitzustellen, vermittels welcher auf einfache Weise eine formschlüssige Verbindung von Reibring und Topf einer Bremsscheibe zum Zwecke der Axialsicherung sichergestellt werden kann.

Oben genannte Aufgabe wird durch ein Verfahren mit einem Schieber-Werkzeug mit den Merkmalen des unabhängigen Patentanspruchs 1 gelöst.

Die vorliegende Erfindung beruht auf dem allgemeinen Gedanken, die Lasche der ersten Topfzahnlücke vermittels des erfindungsgemäßen Schieber-Werkzeugs durch Verstemmung zu deformieren. Hierzu wird die Lasche vermittels des erfindungsgemäßen Schieber-Werkzeugs in radialer Richtung gegen den zugehörigen Ringzahn gedrückt. Aufgrund der zweifachen Anfasung der Stirnseite des Verlängerungsabschnitts des erfindungsgemäßen Schieber-Werkzeugs mit einem ersten und einem zweiten Anfasungswinkel wird durch das Verstemmen der Lasche in radialer Richtung vermittels des Schieber-Werkzeugs die Lasche gleichzeitig auch in axialer Richtung formschlüssig in eine Ausnehmung des Ringzahns gedrückt und damit auch in axialer Richtung deformiert, da aufgrund der zweifachen Anfasung der Verlängerungsabschnitt als Rampe wirkt, vermittels derer die Lasche auch in axialer Richtung deformiert werden kann. Als Folge der axialen Deformation der Lasche wird die Ausbildung eines Spaltes zwischen Lasche und Ringzahn bei der Verstemmung vermieden.

Vermittels des eines Schieber-Werkzeugs wird also aufgrund der vollständig formschlüssigen Verbindung zwischen Lasche und Ausnehmung des Ringzahns eine besonders gute Axialsicherung der Bremsscheibe hinsichtlich der Verbindung von Topf und Reibring erzielt. Aufgrund der in der erfindungsgemäßen Bremsscheibe erzielten optimierten Axialsicherung sind zusätzliche Maßnahmen wie z.B. spezifische Ausprägungen oder Aussparungen in bzw. am Topf bzw. Reibring nicht erforderlich. Dies wiederum hat zur Folge, dass die Bremsscheibe zur Gewährleistung der Axialsicherung einen reduzierten Platzbedarf, insbesondere in radialer Richtung benötigt, was die erforderliche Ausdehnung der Bremsscheibe insbesondere in radialer Richtung reduziert. Die platzsparende Ausbildung der Bremsscheibe ermöglicht zudem eine vereinfachte Kühlung derselben.

In einer bevorzugten Ausführungsform beträgt der erste Anfasungswinkel ungefähr 10° bis 20°, vorzugsweise ungefähr 14°, und der zweite Anfasungswinkel beträgt ungefähr 25° bis 35°, vorzugsweise ungefähr 30°. Auf diese Weise kann vermittels des Schieber-Werkzeugs eine besonders effektive Verstemmung der Lasche in Richtung des zugehörigen Ringzahns sowohl in radialer als auch in axialer Richtung formschlüssig erzielt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine isometrische Darstellung der erfindungsgemäßen Bremsscheibe,
- Fig. 2: einen Schnitt durch einen Topf der erfindungsgemäßen Bremsscheibe,
- Fig. 3: eine isometrische Ansicht eines Reibbrings,
- Fig. 4a bis 4c: eine Darstellung eines erstes Ausführungsbeispiel eines erfindungsgemäßen Schieber-Werkzeugs,
- Fig. 5: eine grobschematische Darstellung des Schieber-Werkzeugs gemäß der Figur 4 beim Verstemmen einer Lasche,
- Fig. 6a bis 6c: eine Darstellung eines zweites Ausführungsbeispiel eines erfindungsgemäßen Schieber-Werkzeuges.

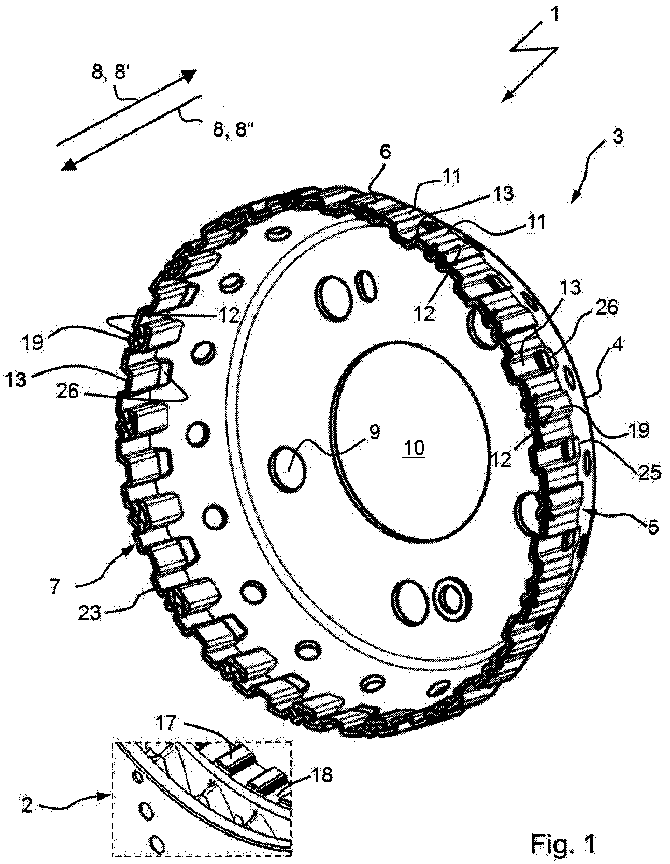

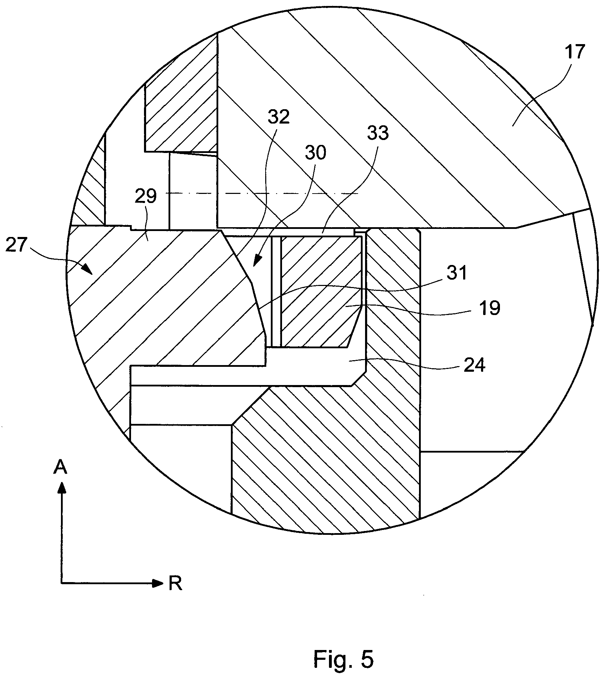

Entsprechend der Fig. 1 weist eine Bremsscheibe 1 einen Reibring 2 sowie einen Topf 3 auf. Der Topf 3 umfasst einen Boden 4 sowie eine vom Boden 4 abstehende und in Umfangsrichtung verlaufende Wand 5. An einem Außenumfang 6 der Wand 5 ist zudem eine Topfverzahnung 7 ausgeformt, wobei die Topfverzahnung 7 als Axialverzahnung ausgestaltet ist und sich entlang der gesamten Umfangsrichtung erstreckt. Die axiale Richtung ist durch Pfeile 8 bzw. in der Fig. 5 als A angedeutet und verläuft parallel zu einer Rotationsachse der Bremsscheibe 1. Zudem weist der Boden 4 Schraublöcher 9 auf, durch die der Topf 3 bzw. die Bremsscheibe 1 an einer Nabe eines Radträgers einer Radaufhängung eines Fahrzeuges befestigt werden kann. Weiter weist der Boden 4 eine Zentralöffnung 10 auf, die zentriert am Topfboden 4 angeordnet ist und z.B. zur Zentrierung der Bremsscheibe 1 an der Nabe dient. Die Topfverzahnung 7 ist durch radial nach außen vorstehende Topfzähne 11 ausgebildet, die jeweils durch Topfzahnlücken 12, 13 entlang der Umfangsrichtung voneinander beabstandet sind, wobei die Topfzähne 11 die gleiche Form und Größe aufweisen.

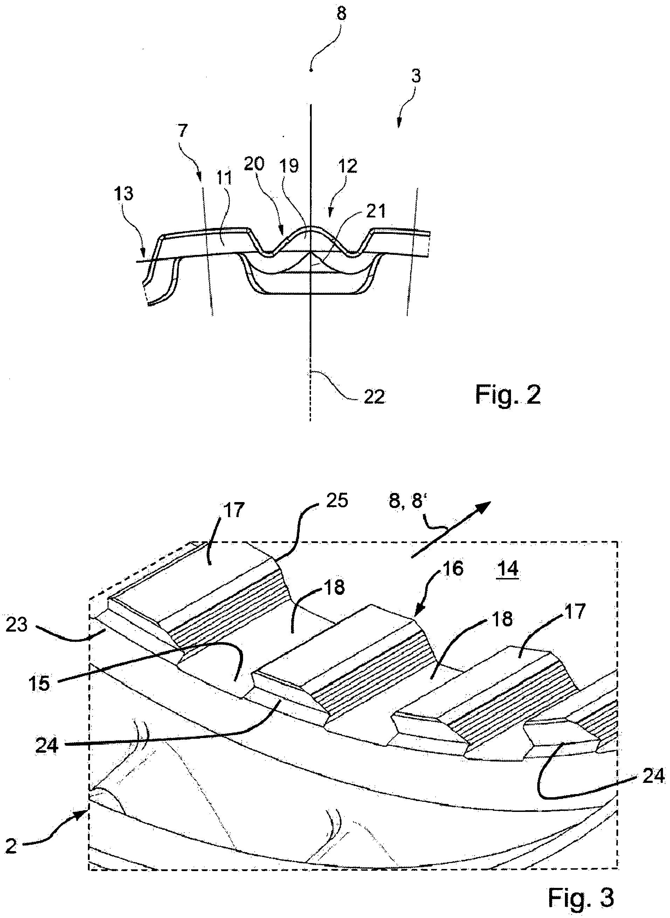

Fig. 3 zeigt den Reibring 2, der eine zentrisch angeordnete Öffnung 14 aufweist. Somit umfasst der Reibring 2 einen die Öffnung 14 umschließenden Innenumfang 15, an dem eine Ringverzahnung 16 des Reibrings 2 ausgebildet ist. Die Ringverzahnung 16 ist als Axialverzahnung ausgestaltet und umfasst radial nach innen vorstehende Ringzähne 17, die jeweils durch eine Ringzahnlücke 18 in Umfangsrichtung voneinander beabstandet sind. Die Ringzähne 17 sowie die Ringzahnlücken 18 weisen jeweils die gleiche Form und Größe auf. Die Topfverzahnung 7 und die Ringverzahnung 16 sind zudem komplementär zueinander ausgebildet, so dass je ein Topfzahn 11 in eine Ringzahnlücke 18 sowie ein Ringzahn 17 in eine Topfzahnlücke 12, 13 eingreift. Durch diesen Eingriff der Topfverzahnung 7 und der Ringverzahnung 16 ist eine Drehsicherung gewährleistet, die eine Übertragung eines Drehmoments zwischen dem Topf 3 und dem Reibring 2 erlaubt.

Wie in den Fig. 1 und 2 zu sehen, weist die Topfverzahnung 7 erste Topfzahnlücken 12 auf, an denen eine Lasche 19 ausgeformt ist. Die Laschen 19 der Topfzahnlücken 12 sind durch freigeschnittene Endabschnitte 20 der jeweiligen Topfzahnlücke 12 gebildet, die aus der übrigen Kontur des jeweiligen Topfzahnlücke 12 herausgeformt sind. Die jeweilige Lasche 19 ist radial nach außen gekrümmt, wobei ein Krümmungsradius 21 der gekrümmten Lasche 19 derart gewählt ist, dass die radial nach außen gekrümmte Lasche 19 einen Außenradius 22 der Wand 5 nicht überschreitet. Durch die Krümmung ist die jeweilige Lasche 19 in einer Axialansicht, wie in Fig. 2 angedeutet, W-förmig ausgebildet. Die radial nach außen gekrümmte Lasche 19 ist zudem derart ausgebildet, dass sie den Ringzahn 17, mit dem die zugehörige Topfzahnlücke 12 im Eingriff steht, an einem ersten, vom Boden 4 abgewandten axialen Ende 23 radial übergreift. Der jeweilige Ringzahn 17 besitzt im gezeigten Beispiel an seinem ersten axialen Ende 23 eine in der Umfangsrichtung verlaufende axiale Ausnehmung 24, in welche die Lasche 19 zusätzlich axial eingreift. Somit ist eine Axialsicherung des Topfes 3 relativ zum Reibring 2 entlang einer ersten Axialrichtung 8' gewährleistet. Um die Axialsicherung auch in die andere Axialrichtung 8" zu gewährleisten, weist die Topfverzahnung 7 zweite Topfzahnlücken 13 auf, die jeweils einen radial nach außen vorstehenden Vorsprung 26 umfassen, der an einem dem Boden 4 zugewandten zweiten axialen Ende 25 der jeweiligen zweiten Topfzahnlücke 13 angeordnet ist. Der jeweilige Vorsprung 26 übergreift den mit der zugehörigen Topfzahnlücke 13 in Eingriff stehenden Ringzahn 17 am zweiten axialen Ende radial. Hiermit ist auch eine Axialsicherung in die zweite Axialrichtung 8" sichergestellt. Für die Montage von Topf 3 und Reibring 2 können die ausgestellten Vorsprünge 26 als Axialanschlag dienen, während die anschließend ausgestellten Laschen 19 die Axialsicherung bewirken.

Es versteht sich, dass das erste radiale Ende 23 und das zweite radiale Ende 25 sowie die entsprechenden Übergriffe der Laschen 19 bzw. der Vorsprünge 26 vertauschbar sind. Das heißt, dass das erste axiale Ende 23 dem Boden 4 zugewandt sein kann, während das zweite radiale Ende 25 vom Boden 4 abgewandt ist.

Die Bremsscheibe 1 wird erfindungsgemäß derart hergestellt, dass zunächst der Topf 3, bei der die Laschen 19 noch nicht deformiert sind, in die Öffnung 14 des Reibrings 2 eingesetzt wird, so dass der Topf 3 und der Reibring 2 konzentrisch angeordnet sind und jeweils ein Topfzahn 11 in eine Ringzahnlücke 18 eingreift, während ein Ringzahn 17 in eine Topfzahnlücke 12, 13 eingreift. Die Vorsprünge 26 der zweiten Topfzahnlücken 13 gewährleisten eine entsprechende axiale Anordnung des Topfes 3 und des Reibrings 2 und dienen als Axialanschlag. Anschließend wird die jeweilige Lasche 19 radial deformiert, wobei diese Deformation durch ein Verstemmen der Lasche 19 erfolgt.

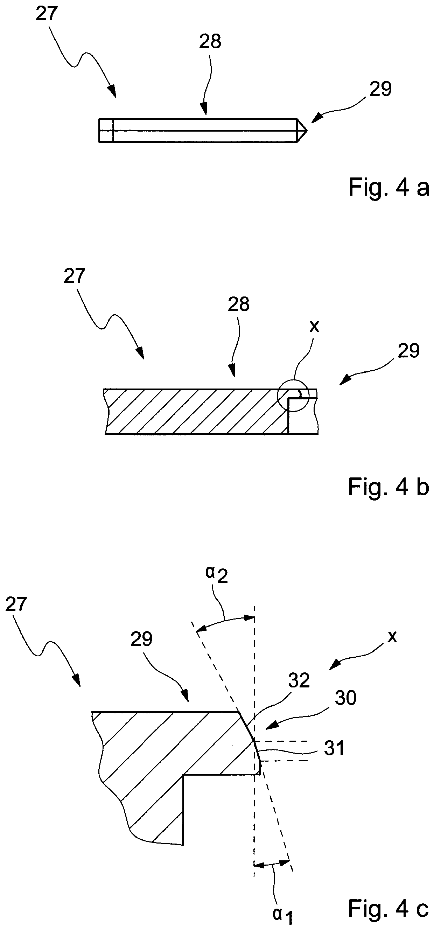

Ein solches Verstemmen der Lasche 19 erfolgt erfindungsgemäß vermittels eines in der Fig. 4 gezeigten Schieber-Werkzeugs 27, welches in der Fig. 4a in einer Draufsicht und in der Fig. 4b in einem Längsschnitt dargestellt ist. Das Schieber-Werkzeug 27 weist einen Hauptabschnitt 28 und einen integral mit dem Hauptabschnitt verbundenen Verlängerungsabschnitt 29 auf. Der Verlängerungsabschnitt 29 ist bezüglich der Draufsicht gemäß der Figur 4a konisch ausgebildet; in Varianten sind aber auch andere Ausbildungsformen vorstellbar.

In der Fig. 4c ist der in Fig. 4b mit einem Kreis X bezeichnete Bereich des Verlängerungsabschnitts 29 (Bereich X) vergrößert dargestellt. Wie in der vergrößerten Darstellung der Fig. 4c gezeigt, weist eine Stirnseite 30 des Verlängerungsabschnitts eine zweifache Anfasung mit zwei unterschiedlichen Anfasungswinkeln auf. Die erste Anfasung 31 weist dabei einen ersten Anfasungswinkel α₁ von 14° auf, die zweite Anfasung 32 einen Anfasungswinkel α₂ von 30°. In Varianten zum ersten Ausführungsbeispiel können die beiden Anfasungswinkel aber andere Werte aufweisen, beispielsweise kann der erste Anfasungswinkel in einen Bereich von ungefähr 10° bis 20° liegen, und der zweite Anfasungswinkel in einem Bereich von ungefähr 25° bis 35°. Vermittels der in der Fig. 4c gezeigten Anfasung des Verlängerungsabschnitts 29 erfolgt eine besonders formschlüssige Verstemmung der Lasche 19 in eine Ausnehmung 24 des Ringzahns 17.

Die radiale Deformation der Lasche 19 wird durch Verstemmung vermittels des erfindungsgemäßen Schieber-Werkzeugs 27 derart ausgeführt, dass nach der Verstemmung die jeweilige Lasche 19 den zugehörigen Ringzahn 17 an zumindest einem axialen Ende 23, 25, hier am ersten axialen Ende 23 übergreift. Gleichzeitig wird der den Ringzahn 17 übergreifende Bereich der jeweils radial nach außen deformierten Lasche 19 in die zugehörige Aussparung 24 am ersten axialen Ende 23 des Ringzahns 17 axial eingedrückt. Somit wird der Reibring 2 relativ zum Topf 3 in beiden Axialrichtungen 8', 8" gesichert.

In der Fig. 5 ist die radiale Deformation der Lasche 19 vermittels des Schieber-Werkzeugs 27 grobschematisch dargestellt. Durch eine Bewegung des Schieber-Werkzeugs 27 in eine radiale Richtung R drückt der Verlängerungsabschnitt 29 ebenfalls in radiale Richtung R gegen die Lasche 19, so dass diese zunächst in radialer Richtung R deformiert wird. Aufgrund der ersten und zweiten Anfasung 31, 32 der Stirnseite 30 des Verlängerungsabschnitts 29 bewirkt und unterstützt die Bewegung des Schieber-Werkzeugs 27 in Richtung R gleichzeitig auch eine Deformation der Lasche 19 in eine axiale Richtung A. Auf diese Weise wird erreicht, dass die Lasche 19 formschlüssig in die Ausnehmung 24 des Ringzahns 17 gedrückt wird. Somit ist sichergestellt, dass ein sich bei der Verstemmung der Lasche 19 gegebenenfalls ausbildender Spalt 33, welcher typischerweise einen Durchmesser von bis zu 0,2 mm aufweist, nicht zwischen der Lasche 19 und der Ausnehmung 24 des Ringzahns 17 verbleibt, sondern der Ringzahn 17 auch axial formschlüssig gegen die Ausnehmung 24 gedrückt ist. Dies führt zu einer verbesserten Axialsicherung zwischen Reibring 2 und Topf 3 der Bremsscheibe.

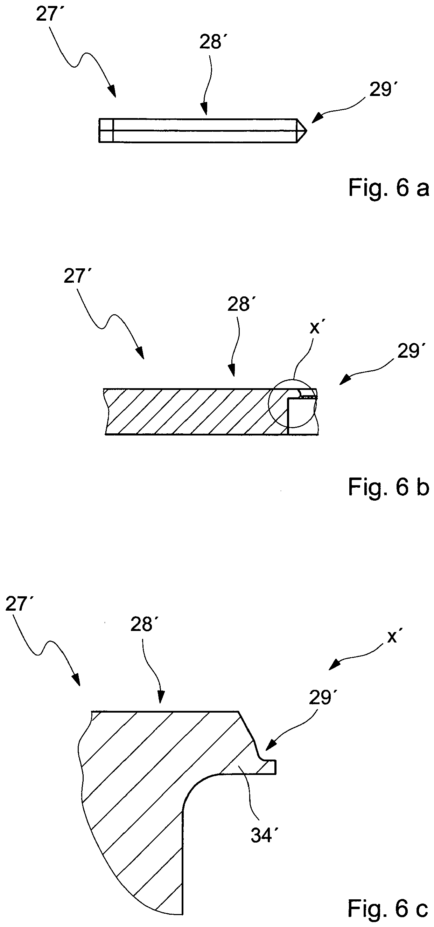

In der Fig. 6 ist ein zweites Ausführungsbeispiel eines erfindungsgemäßen Schieber-Werkzeugs 27' gezeigt. Entsprechend der Fig. 4 zeigt auch die Fig. 6a eine Draufsicht sowie die Fig. 6b einen Längsschnitt des Schieber-Werkzeugs 27'. Die Fig. 6c zeigt den Bereich X' der Fig. 6b in vergrößerter Darstellung.

Das Schieber-Werkzeug 27' unterscheidet sich von dem Schieber-Werkzeug 27 gemäß dem ersten Ausführungsbeispiel darin, dass der Verlängerungsabschnitt 29' vermittels eines Bundes 34' mit dem Hauptabschnitt 28' des Schieber-Werkzeugs 27' verbunden ist. Hauptabschnitt 28', Bund 34' und Verlängerungsabschnitt 29' können dabei als Einheit ausgebildet sein. In einer Variante zum zweiten Ausführungsbeispiel kann daran gedacht sein, Verlängerungsabschnitt 29' oder/und Bund 34' jeweils als getrennte Einheit auszubilden, die miteinander verbindbar sind.

Vermittels des Bundes 34' wird beim Verstemmen der Lasche 19 (vgl. Fig. 5) ein Auswerfen von Laschen-Material verhindert, wenn die Lasche 19 sowohl in radialer als auch axialer Richtung deformiert wird. Auf diese Weise wird eine noch größere Deformation der Lasche 19 in axialer Richtung A ermöglicht. Insbesondere wird es auf diese Weise möglich, auch einen Spalt, der einen Durchmesser von mehr als 0,2 mm aufweist, durch axiale Deformation der Lasche 19 auf 0 mm zu reduzieren, so dass auch in diesem Fall ein formschlüssiges Andrücken der Lasche 19 an die Ausnehmung 24 des Ringzahns 17 möglich ist.

## Patentansprüche

1. Verfahren zur Herstellung einer Bremsscheibe (1) eines Kraftfahrzeuges, mit einem Topf (3) oder Radflansch ,
der einen Boden (4) und eine davon abstehende und umlaufende Wand (5) aufweist, und mit einem Reibring (2), der eine Öffnung (14) aufweist, in der die Wand (5) angeordnet ist, wobei
- der Topf (3) und der Reibring (2) konzentrisch angeordnet sind,
- die Wand (5) eine entlang eines Außenumfangs (6) verlaufende axiale Topfverzahnung (7) mit radial nach außen vorstehenden Topfzähnen (11) aufweist,
- in Umfangsrichtung zwischen benachbarten Topfzähnen (11) je eine Topfzahnlücke (12, 13) angeordnet ist,
- der Reibring (2) eine entlang eines Innenumfangs (15) verlaufende axiale Ringverzahnung (16) aufweist, die komplementär zur Topfverzahnung (7) ausgebildet ist und radial nach innen vorstehende Ringzähne (17) aufweist,
- wobei in Umfangsrichtung zwischen benachbarten Ringzähnen (17) je eine Ringzahnlücke (18) angeordnet ist,
- die Topfzähne (11) in die Ringzahnlücken (18) eingreifen,
- die Ringzähne (17) in die Topfzahnlücken (12, 13) eingreifen,
- an wenigstens einer ersten Topfzahnlücke (12) eine Lasche (19) ausgeformt ist, die radial nach außen absteht und den jeweiligen, mit dieser Topfzahnlücke (12) in Eingriff stehenden Ringzahn (17) an einem ersten axialen Ende (23, 25) radial übergreift,
und wobei die Lasche (19) in axialer Richtung (A) formschlüssig ohne Ausbildung eines Spalts (33), an einer Ausnehmung (24) des Ringzahns (17) gehalten ist,
unter Verwendung eines Schieber-Werkzeugs (27; 27'), das einen Hauptabschnitt (28, 28') und einen an dem Hauptabschnitt (28, 28') angeordneten Verlängerungsabschnitt (29; 29') umfasst, wobei eine Stirnseite (30) des Verlängerungsabschnitts (29; 29') eine zweifache Anfasung (31, 31'; 32, 32') mit einem ersten Anfasungswinkel (α1) und einem zweiten Anfasungswinkel (α2) aufweist, und wobei der Topf (3) oder Radflansch derart in die Öffnung (14) des Reibrings (2) eingesetzt wird, dass jeweils eine Topfzahnlücke (12, 13) und ein Ringzahn (17) sowie eine Ringzahnlücke (18) und ein Topfzahn (11) in Eingriff stehen, wobei die jeweilige Lasche (19) der ersten Topfzahnlücke (12) zumindest bereichsweise durch Verstemmen vermittels des Schieber-Werkzeugs (27; 27') radial in Richtung (R) des zugehörigen ersten Ringzahns (17) deformiert wird,
so dass die jeweilige Lasche (19) aufgrund der zweifachen Anfasung (31, 32) des Schieber-Werkzeugs (27; 27') in axialer Richtung (A) in eine Ausnehmung (24) des zugehörigen Ringzahns (17) eingedrückt wird, derart, dass die Lasche (19) in axialer Richtung (A) formschlüssig, ohne Ausbildung eines Spaltes (33), in die Ausnehmung (24) gedrückt wird, wobei das Verstemmen der Lasche (19) in radialer Richtung vermittels des Schieber-Werkzeugs (27, 27') die Lasche (19) gleichzeitig auch in axialer Richtung (A) formschlüssig in eine Ausnehmung des Ringzahns (17) drückt.

2. Verfahren nach Anspruch 1,
**dadurch gekennzeichnet, dass**
ein Schieber-Werkzeug (27; 27') verwendet wird, bei dem der erste Anfasungswinkel (α1) ungefähr 10° bis 20° beträgt, oder/und der zweite Anfasungswinkel (α 2) ungefähr 25° bis 35° beträgt.

## Claims

1. Method for manufacturing a brake disc (1) of a motor vehicle, having a hub (3) or wheel flange,
which has a bottom (4) and a surrounding wall (5) spaced apart therefrom, and having a friction ring (2) which has an opening (14), in which the wall (5) is arranged, wherein
- the hub (3) and the friction ring (2) are arranged concentrically,
- the wall (5) has an axial hub toothing (7) extending around an outer periphery (6) and having radially outwardly projecting hub teeth (11),
- a hub tooth gap (12, 13) is arranged between adjacent hub teeth (11) in the peripheral direction,
- the friction ring (2) has an axial annular toothing (16) extending around an inner periphery (15) which is formed complementarily to the hub toothing (7) and has radially inwardly projecting annular teeth (17),
- wherein an annular tooth gap (18) is arranged in the peripheral direction between adjacent annular teeth (17),
- the hub teeth (11) engage in the annular tooth gaps (18),
- the annular teeth (17) engage in the hub tooth gaps (12, 13),
- a flap (19) is formed on at least one first hub tooth gap (12) and projects radially outwards and radially engages over the respective annular tooth (17) engaging with this hub tooth gap (12) at a first axial end (23, 25),
- and wherein the flap (19) is held with positive locking in the axial direction (A), without the formation of a gap (33), at a recess (24) of the annular tooth (17),
using a slider tool (27; 27') which comprises a main portion (28, 28') and an extended portion (29; 29') arranged on the main portion (28, 28'), wherein an end face (30) of the extended portion (29; 29') has a double chamfer (31, 31'; 32, 32') with a first chamfer angle (α1) and a second chamfer angle (α2), and wherein the hub (3) or wheel flange is inserted into the opening (14) of the friction ring (2) so that a hub tooth gap (12, 13) and an annular tooth (17) as well as an annular tooth gap (18) and a hub tooth (11) are in engagement, wherein the respective flap (19) of the first hub tooth gap (12) is deformed at least in areas by caulking by means of the slider tool (27; 27') radially in the direction (R) of the associated first annular tooth (17),
so that the respective flap (19), due to the double chamfer (31, 32) of the slider tool (27; 27'), in the axial direction (A), is pressed into a recess (24) of the associated annular tooth (17) in such a way that the flap (19) is pressed in the axial direction (A) with positive locking, without the formation of a gap (33), into the recess (24), wherein the caulking of the flap (19) in the radial direction by means of the slider tool (27, 27') simultaneously also presses the flap (19) in the axial direction (A) with positive locking into a recess of the annular tooth (17).

2. Method according to claim 1,
**characterised in that**
a slider tool (27; 27') is used, wherein the first chamfer angle (α1) is approximately 10° to 20°, and / or the second chamfer angle (α2) is approximately 25° to 35°.

## Revendications

1. Procédé de fabrication d'un disque (1) de frein d'un véhicule automobile, comprenant un pot (3) ou une flasque de roue, qui présente un fond (4) et une paroi (5) éloignée de celui-ci et qui l'entoure, et comprenant une bague de friction (2) qui présente une ouverture (14) dans laquelle est disposée la paroi (5),
- le pot (3) et la bague de friction (2) étant disposés concentriquement,
- la paroi (5) présentant une denture (7) de pot axiale s'étendant le long d'une circonférence extérieure (6) dotée de dents (11) de pot faisant saillie radialement vers l'extérieur,
- dans la direction circonférentielle entre les dents (11) de pot adjacentes étant disposé respectivement un espace (12, 13) de dent de pot,
- la bague de friction (2) présentant une denture annulaire (16) axiale s'étendant le long d'une circonférence intérieure (15), qui est complémentaire à la denture (7) de pot et présentant des dents annulaires (17) faisant saillie radialement vers l'intérieur,
- dans la direction circonférentielle entre les dents annulaires (17) est aménagé respectivement un espace (18) de dent annulaire,
- les dents (11) de pot s'engrenant dans les espaces (18) de dent annulaire,
- les dents annulaires (17) s'engrenant dans les espaces (12, 13) de dent de pot,
- sur au moins un premier espace (12) de dent de pot étant formée une languette (19) qui est bombée radialement vers l'extérieur et la dent annulaire (17) respective en prise avec ledit espace (12) de dent de pot chevauchant radialement une première extrémité axiale (23, 25) et la languette (19) dans la direction axiale (A) en complémentarité de forme étant maintenue sans formation d'un interstice (33) dans un évidement (24) de la dent annulaire (17), à l'aide d'un élément de poussée (27, 27'), qui comprend une section principale (28, 28') et une section d'allongement (29, 29') disposée sur la section principale (28, 28'), une face avant (30) de la section d'allongement (29, 29') présentant un chanfrein (31, 31'; 32, 32') double ayant un premier angle (a1) de chanfrein et un second angle de chanfrein (a2) et le pot (3) ou la flasque de roue étant inséré(e) dans l'ouverture (14) de la bague de friction (2) de sorte que respectivement un espace (12, 13) de dent de pot et une dent annulaire (17), ainsi qu'un espace (18) de dent annulaire et une dent (11) de pot s'engrènent, la languette (19) respective du premier espace (12) de dent de pot étant déformée au moins à certains endroits par matage à l'aide de l'élément de poussée (27, 27') radialement dans la direction (R) de la première dent annulaire (17) correspondante, de sorte que la languette respective (19) grâce au chanfrein (31, 32) double de l'élément de poussée (27, 27') est enfoncée dans la direction axiale (A) dans un évidemment (24) de la dente annulaire correspondante, de sorte que la languette (19) dans la direction axiale (A) est enfoncée, de sorte que la languette (19) dans la direction axiale (A) en complémentarité de forme, sans formation d'un interstice (33)est enfoncée dans l'évidement (24), le matage de la languette (19) dans la direction radiale comprime à l'aide de l'élément de poussée (27, 27') la languette (19) simultanément également dans la direction axiale (A) en complémentarité de forme dans un évidemment de la dente annulaire (17).

2. Procédé selon la revendication 1, **caractérisé en ce qu'**un élément de poussée (27, 27') est utilisé permettant que le premier angle (a1) de chanfrein soit compris entre environ 10° et 20° et/ou le second angle (a2) de chanfrein soit compris entre environ 25° et 35°.
